# EUROPÄISCHE PATENTSCHRIFT

(11) **EP 1 313 774 B1**
(45) Veröffentlichungstag und Bekanntmachung des Hinweises auf die Patenterteilung: **20.08.2008**
(21) Anmeldenummer: 01951544.4
(22) Anmeldetag: 01.06.2001
(51) Int. Cl.: C08F 6/00

(54) **WASSERLÖSLICHE HOMO- UND COPOLYMERE MIT VERBESSERTER UMWELTVERTRÄGLICHKEIT**
WATER-SOLUBLE HOMOPOLYMERS AND COPOLYMERS HAVING AN IMPROVED ENVIRONMENTAL ACCEPTABILITY
HOMO- ET COPOLYMERES SOLUBLES DANS L'EAU AUX PROPRIETES ECOPHILES AMELIOREES

(30) Priorität: 23.08.2000 DE 10041392
(43) Veröffentlichungstag der Anmeldung: 28.05.2003
(73) Patentinhaber: Ashland Licensing and Intellectual Property LLC, Dublin, OH 43017 (US)
(72) Erfinder: MERTENS, Richard, 47803 Krefeld (DE); HERTH, Gregor, 47799 Krefeld (DE)
(74) Vertreter: Wolff, Felix
(86) Internationale Anmeldenummer: PCT/EP2001/006236
(87) Internationale Veröffentlichungsnummer: WO 2002/016445

(56) Entgegenhaltungen:
- WO-A-99/26988
- FR-A- 1 549 213

## Beschreibung

Die vorliegende Erfindung betrifft wasserlösliche Homo- bzw. Copolymere, die einen E_{b}C₅₀-Wert gemäß dem Algentoxizitätstest an *Scenedesmus subspicatus* von mehr als 10 mg/l aufweisen. Die vorliegende Erfindung betrifft desweiteren die Herstellung und Verwendung dieser Polymere als Flockungshilfsmittel oder Verdickungsmittel sowie als Bestandteil eines Pflanzenschutzmittels oder Erosionsschutzmittels..

Wasserlösliche Homo- und Copolymere finden heute eine breite Verwendung, u. a. als Bestandteile von Pflanzenschutz- oder Erosionsschutzmittel. Da diese Polymere häufig in der freien Natur verwendet werden, kommt deren toxikologischen Eigenschaften eine immer größere Bedeutung zu. Insbesondere Polymere auf Basis von Acrylsäure, Methacrylsäure bzw. deren Derivaten weisen eine toxische Wirkung auf Menschen, Säugetiere, aber auch Mikroorganismen, wie beispielsweise Algen, auf. Aufgrund der toxischen Wirkung gegenüber Mikroorganismen ist die Verwendung dieser Polymere in der freien Natur, beispielsweise in Böden, nicht unbedenklich, so daß es in der Vergangenheit nicht an Versuchen gefehlt hat, Polymere mit geringerer toxischer Wirkung zu entwickeln.

FR 1549213 offenbart ein Verfahren zur Extraktion von Polysaccharid an mit komplexer Struktur aus Grünalgen. Dabei werden bestimmte Extrakte als sirupöse Flüssigkeiten erhalten bzw. als flockiger Nierderschlag präzipitiert.

In einer Reihe von bekannten Verfahren erfolgt die Reduzierung des Restmonomerengehaltes durch eine Nachbehandlung der Polymere mit Aminen. So wird in der DE-AS 1 041 248 ein Verfahren zur Reduzierung des Restgehaltes an monomerem Acrylamid in acrylamidhaltigen, wasserlöslichen Copolymeren durch Behandlung der Polymerisate mit Ammoniak oder einem primären bzw. sekundären Amin beschrieben. Der Restgehalt an monomeren Acrylamid kann mit diesem Verfahren auf ca. 0,1 Gew.% reduziert werden. Die so erhältlichen Copolymere sollen im Vergleich zu unbehandelten Polymeren eine geringere Toxizität gegenüber Ratten und Katzen aufweisen.

In der DE 35 39 385 A1 wird ein Verfahren zur Herstellung von Polymergelteilchen offenbart, bei dem das Polymergel durch eine spezielle Walzeneinrichtung geführt wird. Zur Reduzierung des Gehaltes an Acrylamidmonomeren in acrylamidhaltigen Homo- und Copolymeren werden der Schneidevorrichtung dieser Walzeneinrichtung alkalische Verbindungen, Substanzen mit aktivem Wasserstoff oder Verbindungen, die aktiven Wasserstoff bilden können, zugesetzt. Beispiele für solche Verbindungen sind u. a. Alkali-, Erdalkalihydroxide, Sulfite und Amine.

Zur Reduzierung der an restlichen Acrylamidmonomeren wird in der DE 197 52 127 und in der DE 197 52 128 der Zusatz von Ammoniak und Aminen bzw. Ammoniumsalzen zu der Monomerenlösung vor der Polymerisation gelehrt. Um die gewünschte Wirkung zu erzielen, müssen die Produkte bei mehr als 120°C getrocknet werden. Bei diesen hohen Temperaturen treten Vernetzungsreaktionen auf, die zu einer deutlich verschlechterten Löslichkeit der Polymere führt. Dies gilt insbesondere für Copolymere, die neben Acrylamid noch ionische Comonomere, wie Natriumacrylat, enthalten.

Solche partielle Unlöslichkeiten infolge der Nachbehandlung, sei es aufgrund der gewählten Nachbehandlungsreagenzien oder der hohen Nachbehandlungstemperatur, werden in der JP 56-103207 am Beispiel von Copolymeren aus Natriumacrylat und Acrylamid beschrieben. Gemäß dieser Offenbarung führt die Nachbehandlung der entsprechenden Polymere mit 1 Gew.% an Ammoniak, Aminen oder Thiosulfaten, jeweils bezogen auf das Polymer, und anschließender Trocknung bei einer Temperatur von 150°C zu einer Unlöslichkeit fast des gesamten Polymerisates. Die Nachbehandlung mit Ammoniak oder einem Amin führt selbst bei einer geringen Trocknungstemperatur von 50°C zu einer partiellen Unlöslichkeit der Polymere. Um den Restmonomerengehalt zu reduzieren, ohne die Löslichkeit der entsprechenden Polymere zu beeinflussen, wird in dieser Offenbarung ein Verfahren beschrieben, bei dem acrylamidhaltige Polymerisate mit mindestens 1 Gew.% an Sulfiten, Bisulfiten oder Pyrosulfiten versetzt werden und einer darauffolgenden Trocknung bei 50 bis 100 °C unterzogen werden.

Ein ähnliches Verfahren zur Herstellung acrylamidhaltiger Copolymere wird in der DE 1 070 377 beschrieben. Bei diesem Verfahren wird das Polymerisat mit einer wässrigen Lösung von Natriumbisulfit oder Natriummetabisulfit nachbehandelt. Die Sulfite werden dabei in Mengen von mindestens 1 Mol Sulfit je Mol Restacrylamid eingesetzt. Mit diesem Verfahren wird eine Reduzierung des Restmonomerengehaltes auf etwa 0,01% erreicht.

Zu demselben Zweck wird in der US 3,780,006 die Verwendung von gasförmigen Schwefeldioxid offenbart.

In der EP 0 505 163 A1 wird ein Verfahren beschrieben, bei dem superabsorbierende Polymere mit oberflächenaktiven Verbindungen und Substanzen, die mit einer Vinyldoppelbindung reagieren können, wie beispielsweise Sulfite, Bisulfite, Sulfinsäuren, Cystein oder Lysin, behandelt werden. Durch dieses Verfahren kann der Restmonomerengehalt an (Meth)acrylsäure auf unter 10 ppm reduziert werden. Das Verfahren führt jedoch zu einer vergleichsweise starken Nachvernetzung bei unvernetzten Polymeren.

Viele der nach dem Stand der Technik bekannten Verfahren zur Reduzierung des Restmonomerengehaltes weisen den Nachteil auf, daß die verwendeten Substanzen zur Nachbehandlung der Polymere ggf. in Kombination mit den während der Nachbehandlung angewendeten Temperaturen die Löslichkeit oder andere anwendungstechnische Eigenschaften der Polymere verschlechtern. Desweiteren beschränken sich die meisten bekannten Verfahren auf acrylamidhaltige Polymere. Darüber hinaus ist bei den bisher bekannten Polymeren der Aspekt der Toxizität gegenüber Mikroorganismen nicht ausreichend beachtet worden. Gerade aber eine hinreichend geringe Toxizität der Polymere gegenüber Mikroorganismen, wie beispielsweise Algen, ist unter ökologischen Gesichtspunkten für deren Verwendung in der freien Natur erstrebenswert.

Aufgabe der vorliegenden Erfindung ist es daher, wasserlösliche Polymere zur Verfügung zu stellen, die eine im Vergleich zu Polymeren nach dem Stand der Technik verbesserte Umweltverträglichkeit bei im übrigen zumindest gleichwertigen Produkteigenschaften, insbesondere wenigstens gleicher Wasserlöslichkeit, aufweisen.

Die Aufgabe wird erfindungsgemäß durch die Bereitstellung von wasserlöslichen Homo- oder Copolymerpartikeln auf Basis von Monomeren ausgewählt aus der Gruppe bestehend aus Acrylsäure, Methacrylsäure, Acrylsäurederivaten, wie den Salzen der Acrylsäure und Methacrylsäure, Acrylamid, Methacrylamid, Acrylnitril, Methacrylnitril, N,N-Dimethylacrylamid, Vinylpyridin, Vinylacetat, wasserlöslichen ethylenisch ungesättigten organischen Säuren, wie Maleinsäure, Fumarsäure, Itaconsäure, Vinylsulfonsäure, Acrylamidomethylpropansulfonsäure, und deren Salzen hydroxygruppenhaltigen Estern polymerisationsfähiger Säuren, wie Hydroxyethyl- und propylester der Acrylsäure und Methacrylsäure, aminogruppenhaltigen Estern polymerisationsfähiger Säuren, wie Dimethyl- und Diethylaminoalkylester und -amide der Acrylsäure und Methacrylsäure. gelöst, die einen E_{b}C₅₀-Wert gemäß dem Algentoxizitätstest an *Scenedesmus subspicatus* von mehr als 10 mg/l aufweisen.

Desweiteren können zur Modifizierung der Copolymerisate Sulfongruppen und Sulfatgruppen enthaltende Monomere, wie Meth(allylsulfonsäure), Vinylsulfonsäure, Styrolsulfonsäure, Acrylamidomethylproparlsulforlsäure, Phosphongruppen enthaltende Monomere, wie Vinylphosphonsäure, Allylphosphorsäure, Acrylamidomethylpropanphosphonsäure und deren Salze, Hydroxyethyl(meth)acrylatsulfate, Allylalkoholsulfate und - phosphate, Polyalkylenglykolester von (Meth)Acrylsäure und Polyalkylenglykolether mit (Methyl)allylalkohol verwendet werden. Sofern als Monomer eine Säure verwendet wird, kann diese als freie Säure neutralisiert oder teilneutralisiert vorliegen. Die Neutralisation bzw. Teilneutralisation kann mit jeder Base bzw. jeder Mischung aus geeigneten Basen durchgeführt werden, die mit der Säure ein wasserlösliches Salz bildet, insbesondere mit Alkalimetallhydroxiden, Erdalkalimetallhydroxiden und/oder Ammoniak.

Vorzugsweise enthalten die Polymerpartikel als Monomer wenigstens ein Acrylsäurederivat bzw. Methacrylsäurederivat oder Acrylsäure, bzw. Methacrylsäure.

Besonders bevorzugt enthalten die Polymerpartikel zusätzlich wenigstens ein weiteres polymerisiertes Monomer aus der Gruppe der monoethylenisch, ungesättigten C₃₋₁₀-Monocarbonsäuren, deren Alkali-, Ammonium- und Aminsalze und/oder wenigstens ein weiteres polymerisiertes, zur Modifizierung der Copolymerisate geeignetes, Monomer.

Ganz besonders bevorzugt bestehen die erfindungsgemäßen wasserlöslichen Polymerpartikel aus 1 bis 99 Gew.% Acrylamid und 99 bis 1 Gew.% Acrylsäure, die zu 0 bis 100 Mol% neutralisiert ist.

Überraschenderweise sind wasserlösliche Polymerpartikel mit einem E_{b}C₅₀-Wert nach dem Algentoxizitätstest an *Scenedesmus subspicatus* von mehr als 10 mg/l dadurch erhältlich, daß die Polymerpartikel wärmebehandelt werden und der Monomerenlösung vor der Polymerisation oder dem Polymerisat nach der Polymerisation, aber vor der Wärmebehandlung, wenigstens ein Ammoniumsalz und ein wasserlösliches Amin zugesetzt wird.

Erfindungsgemäß werden als Ammoniumsalze wasserlösliche anorganische und organische Salze des Ammoniaks verwendet.

Vorzugsweise werden als anorganische Ammoniumsalze die Fluoride, Chloride, Bromide, lodide, Sulfate, Sulfite, Sulfoxilate, Phosphate, Phosphonate, Nitrate sowie Nitrite des Ammoniaks eingesetzt.

Als organische Ammoniumsalze eignen sich Salze von aliphatischen und aromatischen Säuren sowie Salze von Säuren, die sowohl aliphatische als auch aromatische Gruppen aufweisen. Vorzugsweise werden Salze der Ameisensäure, Essigsäure, Propionsäure, Buttersäure, Milchsäure, Oxalsäure, Maleinsäure, Fumarsäure, Glutarsäure, Methansulfonsäure, Asparaginsäure, Benzoesäure, Toluolsulfonsäure, Styrolsulfonsäure, Naphthalinsulfonsäure oder Benzolsulfonsäure verwendet.

Vorzugsweise werden 0,05 bis 10 Gew.% und besonders bevorzugt 0,2 bis 3 Gew.%, bezogen auf das Produkt, eines Ammoniumsalzes verwendet.

Als Aminkomponente können alle wasserlöslichen Amine oder deren Mischung aus mindestens zwei Aminen eingesetzt werden, wie aliphatische Mono- und Polyamine, cycloaliphatische Mono- und Polyamine, heterocyclische Amine und Alkanolamine. Vorzugsweise werden aliphatische C₁-C₁₀-Amine, cycloaliphatische C₁-C₁₀-Amine, aromatische C₆-C₁₂-Amine verwendet. Besonders bevorzugt werden Alkanolamine und ganz besonders bevorzugt lsopropanolamin eingesetzt.

Vorzugsweise werden 0,1 bis 12 Gew.%, bezogen auf das Produkt, und besonders bevorzugt 0,5 bis 5 Gew.% eines wasserlöslichen Amins eingesetzt.

Das Ammoniumsalz bzw. eine Mischung aus wenigstens zwei Ammoniumsalzen und das Amin bzw. eine Mischung aus wenigstens zwei Aminen können in jedem Verfahrensschritt vor der Wärmebehandlung des Polymers zugesetzt werden. Die Komponenten müssen dabei nicht in der gleichen Verfahrensstufe zugegeben werden. So kann beispielsweise das Ammoniumsalz der Reaktionslösung vor der Polymerisation und die Aminkomponente unmittelbar vor der Wärmebehandlung zugesetzt werden. Die einzelnen Komponenten können jeweils in einem Verfahrensschritt oder aufgeteilt auf verschiedene Verfahrensschritte zugegeben werden. Beispielsweise kann ein Anteil eines Ammoniumsalzes der Monomerenlösung vor der Polymerisation und der restliche Anteil des Ammoniumsalzes dem Polymer unmittelbar vor der Wärmebehandlung zugesetzt werden. Vorzugsweise wird jedoch das Ammoniumsalz bzw. eine Mischung aus wenigstens zwei Ammoniumsalzen und das Amin bzw. eine Mischung aus wenigstens zwei Aminen dem Verfahren in dem gleichen Verfahrensschritt zugesetzt, und zwar entweder der Monomerenlösung vor der Polymerisation oder dem Polymerisat nach der Zerkleinerung und unmittelbar vor der Wärmebehandlung.

Die nach der Polymerisation als Gel vorliegenden Polymerisate werden als Vorbereitung zur Wärmebehandlung zerkleinert.

Spätestens vor Beginn der Wärmebehandlung muß dem Polymerisat wenigstens ein Ammoniumsalz und wenigstens ein Amin zugesetzt sein. Die Wärmebehandlung wird bei einer Temperatur von 80 bis 120°C, bevorzugt zwischen 90 und 110°C, durchgeführt.

Abschließend werden die getrockneten Polymerisate nochmals zerkleinert, gemahlen und in die erforderlichen Siebfraktionen aufgetrennt.

Die erfindungsgemäßen Polymerpartikel zeichnen sich gegenüber den nach dem Stand der Technik bekannten Polymeren durch ihre verbesserte Umweltverträglichkeit aus, die in ihrer geringen Toxizität, insbesondere gegenüber Mikroorganismen, wie beispielsweise Algen, begründet liegt. Als Maß für die Toxizität gegenüber Algen können E_{b}C₅₀-Werte verwendet werden. Der E_{b}C₅₀-Wert gibt an, bei welcher Konzentration an Prüfsubstanz eine 50% Hemmung des Wachstums einer zuvor in der exponentiellen Wachstumsphase befindlichen Algenkultur eintritt. Während die Polymere nach dem Stand der Technik im wesentlichen E_{b}C₅₀-Werte < 10 mg/l aufweisen, werden mit den erfindungsgemäßen Polymerpartikeln gleicher Zusammensetzung mit jeweils > 10 mg/l signifikant höhere E_{b}C₅₀-Werte erhalten. Aufgrund des geringen toxischen Potentials sind die erfindungsgemäßen Polymerpartikel gegenüber den nach dem Stand der Technik bekannten Polymeren aus ökologischen Gesichtspunkten vor allem in der freien Natur bevorzugt einzusetzen. Die erfindungsgemäßen Polymerpartikel sind in ihren übrigen Produkteigenschaften, insbesondere in ihrer Wasserlöslichkeit, denen der bisher zu diesen Zweck bekannten Polymere, zumindest gleichwertig. Da bei deren Herstellung keine weiteren Zusätze verwendet werden, die zu Nebenreaktionen führen können, weisen die erfindungsgemäßen Polymerpartikel gegenüber denen nach dem Stand der Technik in der Regel sogar überlegene Produkteigenschaften auf.

Ein weiterer Gegenstand der vorliegenden Erfindung ist ein Verfahren zur Herstellung der erfindungsgemäßen wasserlöslichen Polymerpartikel durch Polymerisation einer Monomerenlösung, wobei die resultierenden Polymerpartikel wärmebehandelt werden und der Monomerenlösung vor der Polymerisation oder dem Polymerisat nach der Polymerisation, aber vor der Wärmebehandlung, wenigstens ein Ammoniumsalz und ein wasserlösliches Amin zugesetzt wird.

Die vorliegende Erfindung betrifft sowohl die Herstellung von Homo- als auch Copolymerpartikeln. Als Monomere werden vorzugsweise Acrylsäure sowie Methacrylsäure, Acrylsäurederivate, wie die Salze der Acrylsäure und Methacrylsäure, Acrylamid, Methacrylamid, Acrylnitril, Methacrylnitril, N,N-Dimethylacrylamid, Vinylpyridin, Vinylacetat, wasserlösliche, ethylenisch ungesättigte organische Säuren, wie Maleinsäure, Fumarsäure, ltaconsäure, Vinylsulfonsäure, Acrylamidomethylpropansulfonsäure, und deren Salze, hydroxygruppenhaltige Ester polymerisationsfähiger Säuren, wie Hydroxyethyl- und propylester der Acrylsäure und Methacrylsäure, aminogruppenhaltige Ester polymerisationsfähiger Säuren, wie Dimethyl- und Diethylaminoalkylester und -amide der Acrylsäure und Methacrylsäure, eingesetzt. Desweiteren können zur Modifizierung der Copolymerisate Sulfongruppen und Sulfatgruppen enthaltende Monomere, wie Meth(allylsulfonsäure), Vinylsulfonsäure, Styrolsulfonsäure, Acrylamidomethylpropansulfonsäure, PhosphoNgruppen enthaltende Monomere, wie Vinylphosphonsäure, Allylphosphorsäure, Acrylamidomethylpropanphosphonsäure und deren Salze, Hydroxyethyl(meth)acrylatsulfate, Allylalkoholsulfate und - phosphate, Polyalkylenglykolester von (Meth)Acrylsäure und Polyalkylenglykolether mit (Methyl)allylalkohol verwendet werden. Sofern als Monomer eine Säure verwendet wird, kann diese als freie Säure, neutralisiert oder teilneutralisiert vorliegen. Die Neutralisation bzw. Teilneutralisation kann mit jeder Base bzw. jeder Mischung aus geeigneten Basen durchgeführt werden, die mit der Säure ein wasserlösliches Salz bildet, insbesondere mit Alkalimetallhydroxiden, Erdalkalimetallhydroxiden und/oder Ammoniak.

Vorzugsweise wird als Monomer wenigstens ein Acrylsäurederivat bzw. Methacrylsäurederivat oder Acrylsäure bzw. Methacrylsäure eingesetzt.

Besonders bevorzugt wird zusätzlich wenigstens ein weiteres Monomer aus der Gruppe der monoethylenisch, ungesättigten C₃-₁₀-Monocarbonsäuren, deren Alkali-, Ammonium- und Aminsalze und/oder wenigstens ein weiteres zur Modifizierung der Copolymerisate geeignetes Monomer verwendet.

Ganz besonders bevorzugt wird eine Monomerenlösung verwendet, die als Monomere 1 bis 99 Gew.% Acrylamid, bezogen auf die Gesamtmenge an Monomeren, und 99 bis 1 Gew.% Acrylsäure, die zu 0 bis 100 Mol% neutralisiert, enthält.

Der Monomerenlösung, die vorzugsweise 15 bis 50 Gew.% an Monomeren enthält, wird gegebenenfalls wenigstens ein Ammoniumsalz oder wenigstens ein Amin oder eine Mischung aus wenigstens einem Ammoniumsalz, eine Mischung aus wenigstens einem Amin zugesetzt.

Die Polymerisationsreaktion wird durch Zugabe der dem Fachmann bekannten Polymerisationsinitiatoren, wie Peroxidverbindungen, Peroxidsulfate, Azoverbindungen, Redoxsysteme und Photoinitiatoren gestartet. Vorzugsweise wird hierzu ein Redoxsystem aus den Komponenten Oxidationsmittel und Reduktionsmittel oder ein Photoinitiator eingesetzt.

Die Oxidationsmittel werden in einer Konzentration 0,00005 bis 0,5 Gew.%, bevorzugt von 0,001 bis 0,1 Gew.%, jeweils bezogen auf die Polymerisationslösung, eingesetzt. Vorzugsweise werden für diesen Zweck Peroxidverbindungen, wie Alkalimetall- oder Ammoniumpersulfat, Alkalimetall- oder Ammoniumperphosphate, Wasserstoffperoxid oder dessen Salze, Benzoylperoxid, Butylhydroperoxid oder Persäuren verwendet. Aber auch andere Oxidationsmittel, wie vorzugsweise Kaliumpermanganat, Natrium- oder Kaliumchlorat, Kaliumdichromat, können eingesetzt werden.

Die Reduktionsmittel werden ebenfalls in einer Konzentration von 0,00005 bis 0,5 Gew.%, bevorzugt von 0,001 bis 0,1 Gew.% , jeweils bezogen auf die Monomerenlösung, eingesetzt. Als Reduktionsmittel werden vorzugsweise schwefelhaltige Verbindungen, wie Sulfite, Thiosulfate, Sulfinsäure oder organische Thiole, niedervalente Metallsalze, wie Kupfer(I), Mangan(II), Eisen(II), Ascorbinsäure oder Phosphorverbindungen, wie Natriumhypophosphit, verwendet.

Im Falle einer Photopolymerisation wird die Reaktion mit UV-Licht gestartet, das den Zerfall des Starters bewirkt. Als Starter werden vorzugsweise Benzoin- und Benzoinderivate, wie Benzoinether, Benzil und dessen Derivate, wie Benzilketale, Acryldiazoniumsalze, Azoinitiatoren wie z.B. 2,2'-Azobis(isobutyronitril), 2,2'-Azobis(2-amidinopropan)-hydrochlorid oder Acetophenonderivate verwendet. Zur Photoinitiation werden 0,001 bis 0,1 Gew.%, bevorzugt 0,002 bis 0,05 Gew.%, eingesetzt.

Die Polymerisation wird in wässriger Lösung diskontinuierlich in einem Polymerisationsgefäß oder kontinuierlich auf einem endlosen Band, wie es beispielsweise in der DE 35 44 770 beschrieben worden ist, durchgeführt. Diese Schrift wird hiermit als Referenz eingeführt und gilt als Teil der Offenbarung. Der Prozeß wird bei einer Temperatur zwischen -20 und 50°C, bevorzugt zwischen -10 und 10°C, gestartet und bei Atmosphärendruck ohne äußere Wärmezufuhr durchgeführt, wobei durch die Polymerisationswärme eine vom Gehalt an polymerisierbarer Substanz abhängige maximale Endtemperatur von 50 bis 150°C erreicht wird.

Nach dem Ende der Polymerisation erfolgt eine Zerkleinerung des als Gel vorliegenden Polymerisates.

Spätestens nach diesem Verfahrensschritt werden dem Polymerisat, sofern keine dieser Komponenten in einem vorherigen Verfahrensschritt zugesetzt wurden, wenigstens ein Ammoniumsalz sowie wenigstens ein Amin und, sofern diese Komponenten nicht vollständig in einem vorherigen Verfahrensschritt zugesetzt wurden, die Restmengen wenigstens eines Amins und/oder wenigstens eines Ammoniumsalzes zugegeben.

Das Ammoniumsalz bzw. eine Mischung aus wenigstens zwei Ammoniumsalzen und das Amin bzw. eine Mischung aus wenigstens zwei Aminen können erfindungsgemäß in jedem Verfahrensschritt vor der Wärmebehandlung des Polymers zugesetzt werden. Die Komponenten müssen dabei nicht in der gleichen Verfahrensstufe zugegeben werden. So kann beispielsweise das Ammoniumsalz der Reaktionslösung vor der Polymerisation und die Aminkomponente unmittelbar vor der Wärmebehandlung zugesetzt werden oder der Aminzusatz erfolgt zur Monomerenlösung und das Ammoniumsalz wird zum Polymerisatgel gegeben. Die einzelnen Komponenten können jeweils in einem Verfahrensschritt oder aufgeteilt auf verschiedene Verfahrensschritte zugegeben werden. Beispielsweise kann ein Anteil eines Ammoniumsalzes der Monomerenlösung vor der Polymerisation und der restliche Anteil des Ammoniumsalzes dem Polymer unmittelbar vor der Wärmebehandlung zugesetzt werden. Vorzugsweise wird jedoch das Ammoniumsalz bzw. eine Mischung aus wenigstens zwei Ammoniumsalzen und das Amin bzw. eine Mischung aus wenigstens zwei Aminen dem Verfahren in dem gleichen Verfahrensschritt zugesetzt, und zwar entweder der Monomerenlösung vor der Polymerisation oder dem Polymerisat nach der Zerkleinerung und unmittelbar vor der Wärmebehandlung.

Als Ammoniumsalze werden erfindungsgemäß wasserlösliche anorganische und organische Salze des Ammoniaks verwendet.

Als anorganische Ammoniumsalze werden vorzugsweise die Fluoride, Chloride, Bromide, Iodide, Sulfate, Sulfite, Sulfoxilate, Phosphate, Phosphonate, Nitrate sowie Nitrite des Ammoniaks eingesetzt.

Als organische Ammoniumsalze eignen sich Salze von aliphatischen und aromatischen Säuren sowie Salze von Säuren, die sowohl aliphatische als auch aromatische Gruppen aufweisen. Vorzugsweise werden Salze der Ameisensäure, Essigsäure, Propionsäure, Buttersäure, Milchsäure, Oxalsäure, Maleinsäure, Fumarsäure, Glutarsäure, Methansulfonsäure, Asparaginsäure, Benzoesäure, Toluolsulfonsäure, Styrolsulfonsäure, Naphthalinsulfonsäure oder Benzolsulfonsäure verwendet.

Vorzugsweise werden 0,05 bis 10 Gew.%, besonders bevorzugt 0,2 bis 3 Gew.%, bezogen auf das Produkt, eines Ammoniumsalzes eingesetzt.

Als Aminkomponente können alle wasserlöslichen Amine oder deren Mischung aus mindestens zwei Aminen eingesetzt werden, wie aliphatische Mono- und Polyamine, cycloaliphatische Mono- und Polyamine, heterocyclische Amine und Alkanolamine. Vorzugsweise werden aliphatische C₁-C₁₀-Amine, cycloaliphatische C₁-C₁₀-Amine, aromatische C₆-C₁₂-Amine verwendet werden. Besonders bevorzugt werden Alkanolamine und ganz besonders bevorzugt Isopropanolamin verwendet.

Vorzugsweise werden 0,1 bis 12 Gew.%, bevorzugt 0,5 bis 5 Gew.%, bezogen auf das Produkt, eines wasserlöslichen Amins, eingesetzt.

Das zerkleinerte Polymerisat wird anschließend bei einer Temperatur von 80 bis 120°C, bevorzugt bei 90 bis 110°C, wärmebehandelt.

Abschließend werden die getrockneten Polymerisate nochmals zerkleinert, gemahlen und in die erforderlichen Siebfraktionen aufgetrennt.

Durch das erfindungsgemäße Verfahren können Polymerpartikel hergestellt werden, die vollständig wasserlöslich sind. Da granuläre Polymere ohnehin im Verlauf ihrer Herstellung getrocknet werden müssen, stellt der Wärmebehandlungsschritt in dem erfindungsgemäßen Verfahren keinen zusätzlichen Verfahrensschritt dar. Desweiteren weisen die gemäß dem erfindungsgemäßen Verfahren hergestellten Polymerpartikel im Vergleich zu den bisher bekannten Polymeren eine erhöhte Umweltverträglichkeit auf, die sich vor allem in einer geringeren Toxizität gegenüber Mikroorganismen, insbesondere gegenüber Algen, manifestiert.

Die erfindungsgemäßen Polymerpartikel eignen sich insbesondere für Anwendungen, bei denen eine geringe Toxizität gegenüber Mikroorganismen gefordert ist. Vorzugsweise finden sie als Flockungshilfsmittel Verwendung, besonders bevorzugt bei der Eisenabtrennung im Bayer-Prozeß, im Bergbau bei der Aufarbeitung von Kohle und Erz und in der Zuckerindustrie. Ebenfalls besonders bevorzugt können sie als Flockungshilfsmittel bei der Wasseraufbereitung und Abwasserreinigung, ganz besonders bevorzugt in Kombination mit einem weiteren Flockungshilfsmittel, in der sogenannten Dualflockung, eingesetzt werden.

Desweiteren bevorzugt können die erfindungsgemäßen Polymerpartikel als Verdickungsmittel eingesetzt werden, oder als Zusatz für wasserbasierende Bodensprühungen oder als Zusatz zu Pflanzenschutzmitteln oder Erosionsschutzmitteln.

Vorzugsweise beträgt der E_{b}C₅₀-Wert der verwendeten Mittel mehr als 10 mg/l.

### Prüfmethode

### Bestimmung der Viskosität des Polymeren

Die Viskosität wird an einer 0,5%igen Lösung des Polymeren in 10%iger wässriger Kochsalzlösung mit einem Brookfield-Viskosimeter bestimmt.

### Bestimmung des temporären Gelanteiles

1,0 g der zu prüfenden Substanz wird in 1 1 Leitungswasser über eine Stunde unter Rühren gelöst und über ein Sieb (315 µm Maschenweite; 200 mm Durchmesser; 50 mm Höhe) filtriert. Der Rückstand wird mit Wasser nachgewaschen und der Überstand in ml gemessen.

### Algentoxizitätstest

Die Algentoxizität wird gegenüber *Scenedesmus subspicatus* gemäß OECD-Richtlinie 201, 4. Aufl., "Growth Inhibition Test" bestimmt.

### Beispiele

Im folgenden wird die Erfindung anhand von Beispielen erläutert. Diese Erläuterungen sind lediglich beispielhaft und schränken den allgemeinen Erfindungsgedanken nicht ein.

### Dabei werden folgende Abkürzungen verwendet:

ABAH 2,2'-Azobis(2-methylpropionamidin)dihydrochlorid

### Beispiel 1

In einem Polymerisationsgefäß wurden zunächst 630 g einer 50%igen wässrigen Acrylamidlösung vorgelegt und diese mit 650 g Wasser sowie 210 mg Versenex 80 der Dow Chemical Company vermischt. Nach Zugabe von 103,4 g Acrylsäure wurde die Mischung mit 106 g an 50%iger wässriger NaOH-Lösung auf pH 6,0 neutralisiert, anschließend auf -5°C abkühlt und die Lösung mit Stickstoff ausgeblasen. Nach der Zugabe von 0,45 g ABAH wurde die Polymerisation mit UV-Licht gestartet. Während einer Polymerisationszeit von 25 min erwärmte sich die Reaktionsmischung von -5°C auf 80 °C. Das Polymer wurde anschließend mit einem Fleischwolf zerkleinert und 300 g dieses Gels mit 20 g einer Lösung bestehend aus 16,1 g Wasser, 3,0 g Isopropanolamin und 0,9 g Ammoniumsulfat durchmischt und für 90 min bei 110°C wärmebehandelt. Abschließend wurde das Polymer auf eine Kornfraktion von 90-1400 µm vermahlen.

Die Ergebnisse des Algentoxizitätstests sowie die physikalischen Parameter der Polymerpartikel sind in der Tabelle 1 aufgeführt.

### Beispiel 2

Es wurde dieselbe Monomerenlösung wie in Beispiel 1 unter den dort beschriebenen Bedingungen polymerisiert. Das Polymer wurde mit einem Fleischwolf zerkleinert und 300 g dieses Gels mit einer Lösung bestehend aus 12,8 g Wasser, 4,5 g Isopropanolamin und 2,7 g Ammoniumchlorid durchmischt und für 90 min bei 110°C wärmebehandelt. Abschließend wurde das Polymer auf eine Kornfraktion von 90-1400 µm vermahlen.

Die Ergebnisse des Algentoxizüätstests sowie die physikalischen Parameter der Polymerpartikel sind in der Tabelle 1 aufgeführt.

### Vergleichsbeispiel 1

Es wurde dieselbe Monomerenlösung wie in Beispiel 1 unter den dort beschriebenen Bedingungen polymerisiert, das Polymerisat mit einem Fleischwolf zerkleinert und das Produkt anschließend ohne weitere Zusätze wärmebehandelt.

Die Ergebnisse des Algentoxizitätstests sowie die physikalischen Parameter der Polymerpartikel sind in der Tabelle 1 aufgeführt.

### Vergleichsbeispiel 2 (entsprechend DE 197 52 127)

In einem Polymerisationsgefäß wurden zunächst 420 g an 50%iger wässriger Acrylamidlösung vorgelegt und mit 341,2 g Wasser sowie 140 mg Versenex 80 vermischt. Nach der Zugabe von 68,9 g Acrylsäure und 55,8 g Ammoniumchlorid wurde die Mischung mit 70,7 g 50%iger wässriger NaOH-Lösung auf pH 6,0 neutralisiert, anschließend auf -5°C abkühlt und die Lösung mit Stickstoff ausgeblasen. Nach der Zugabe von 0,30 g ABAH wurde die Polymerisation mit UV-Licht gestartet. Während einer Polymerisationszeit von 25 min erwärmte sich die Reaktionsmischung von -5°C auf 80 °C. Das Polymer wurde mit einem Fleischwolf zerkleinert und für 90 min bei 110°C wärmebehandelt. Abschließend wurde das Produkt auf eine Kornfraktion von 90-1400 µm gemahlen.

Die Ergebnisse des Algentoxizitätstests sowie die physikalischen Parameter der Polymerpartikel sind in der Tabelle 1 aufgeführt.

### Beispiel 3

In einem Polymerisationsgefäß wurden zunächst 630 g an 50%iger wässriger Acrylamidlösung vorgelegt und mit 579,4 g Wasser sowie 210 mg Versenex 80 vermischt. Nach der Zugabe von 103,4 g Acrylsäure und 12,75 g lsopropanolamin wurde mit 50%iger wässriger NaOH-Lösung auf pH 6,0 neutralisiert. Nach der Neutralisation wurde 25 g 20%ige wäßrige Ammoniumchloridlösung zugegeben und der Ansatz wurde auf -5°C abkühlt. Nach dem Ausblasen mit Stickstoff wurden zu der Mischung 0,45 g ABAH zugegeben und die Polymerisation mit UV-Licht gestartet. Während einer Polymerisationszeit von 25 min erwärmte sich die Reaktionsmischung von -5°C auf 80 °C. Das Polymer wurde mit einem Fleischwolf zerkleinert und für 90 min bei 110°C wärmebehandelt. Das Produkt wurde auf eine Kornfraktion von 90-1400 µm vermahlen.

Die Ergebnisse des Algentoxizitätstests sowie die physikalischen Parameter der Polymerpartikel sind in der Tabelle 1 aufgeführt.

### Beispiel 4

Es wurde analog zu Beispiel 3 vorgegangen, mit dem Unterschied, daß 33 g statt 12,75 g Isopropanolamin verwendet wurden.

Die Ergebnisse des Algentoxizitätstests sowie die physikalischen Parameter der Polymerpartikel sind in der Tabelle 1 aufgeführt.

**Tabelle 1**

| **Beispiel** | **vollständige Löslichkeit nach 16 h** | **Temporärer Gelwert (1 h) [ml]** | **Viskosität [mPa·s]** | **E_{b}C₅₀-Wert [mg/l]** |
|---|---|---|---|---|
| V 1 | ja | 70 | 395 | 9 |
| V 2 | nein | 180 | 100 | n.d. |
| 1 | ja | 13 | 300 | 22 |
| 2 | ja | 22 | 270 | 50 |
| 3 | ja | 19 | 250 | 22 |
| 4 | ja | 2 | 170 | >100 |

| | | | | |
|---|---|---|---|---|
| n.d.- Wert nicht bestimmt | | | | |

### Beispiel 5

Es wurde wie in Beispiel 1 polymerisiert. Das gewölfte Gel (300 g) wurde dann aber mit einer Lösung von 3,0 g Methylaminoethanol und 0,9 g Ammoniumsulfat in 16,1 g Wasser nachbehandelt. Die weitere Aufarbeitung erfolgte wieder analog zu Beispiel 1.
Das Produkt besitzt eine Viskosität von 180 mPas und einen temporären Gelwert (1 h) von 10 mL.
Auch dieses Produkt ist nach 16 h vollständig löslich. Der E_{b}C₅₀-Wert dieses Produktes liegt bei 27 mg/L.

### Beispiel 6

Es wurde wie in Beispiel 1 polymerisiert. Das gewölfte Gel (300 g) wurde dann aber mit einer Lösung von 3,0 g Methylaminoethanol und 0,3 g Ammoniumsulfat in 16,7 g Wasser nachbehandelt. Die weitere Aufarbeitung erfolgte wieder analog zu Beispiel 1.
Das Produkt besitzt eine Viskosität von 200 mPas und einen temporären Gelwert (1 h) von 9 mL.
Auch dieses Produkt ist nach 16 h vollständig löslich. Der E_{b}C₅₀-Wert dieses Produktes liegt bei 26 mg/L.

### Beispiel 7

Es wurde wie in Beispiel 1 polymerisiert. Das gewölfte Gel (300 g) wurde dann aber mit einer Lösung von 1,5 g 4-Amino-1-butanol und 2,7 g Ammoniumsulfat in 16,8 g Wasser nachbehandelt. Die weitere Aufarbeitung erfolgte wieder analog zu Beispiel 1.
Das Produkt besitzt eine Viskosität von 230 mPas und einen temporären Gelwert (1 h) von 28 mL.
Auch dieses Produkt ist nach 16 h vollständig löslich. Der E_{b}C₅₀-Wert dieses Produktes liegt bei 18 mg/L.

### Beispiel 8

Es wurde wie in Beispiel 1 polymerisiert. Das gewölfte Gel (300 g) wurde dann aber mit einer Lösung von 3,0 g 4-Amino-1-butanol und 2,7 g Ammoniumsulfat in 12,8 g Wasser nachbehandelt. Die weitere Aufarbeitung erfolgte wieder analog zu Beispiel 1.
Das Produkt besitzt eine Viskosität von 230 mPas und einen temporären Gelwert (1 h) von 20 mL.
Auch dieses Produkt ist nach 16 h vollständig löslich. Der E_{b}C₅₀-Wert dieses Produktes liegt bei 18 mg/L.

### Beispiel 9

In einem Polymerisationsgefäß wurden zunächst 630,0 g 50%ige wässrige Acrylamidlösung vorgelegt und mit 579,4 g Wasser sowie 210 mg Versenex 80 vermischt. Nach der Zugabe von 103,4 g Acrylsäure und 4,98 g Methylaminoethanol wurde mit 50%iger wässriger NaOH-Lösung auf pH 6,0 neutralisiert. Nach der Neutralisation wurden 67,5 g 20%ige wässrige Ammoniumsulfatlösung in Wasser zugegeben und analog zu Beispiel 3 polymerisiert.
Das Produkt besitzt eine Viskosität von 200 mPas und besitzt einen temporären Gelwert (1 h) von 9 mL. Das Produkt ist nach 16 h vollständig löslich.
Der E_{b}C₅₀-Wert dieses Produktes liegt bei 16 mg/L.

### Beispiel 10

In einem Polymerisationsgefäß wurden zunächst 630,0 g 50%ige wässrige Acrylamidlösung vorgelegt und mit 579,4 g Wasser sowie 210 mg Versenex 80 vermischt. Nach der Zugabe von 103,4 g Acrylsäure und 9,96 g Methylaminoethanol wurde mit 50%iger wässriger NaOH-Lösung auf pH 6,0 neutralisiert. Nach der Neutralisation wurden 67,5 g 20%ige wässrige Ammoniumsulfatlösung in Wasser zugegeben und analog zu Beispiel 3 polymerisiert.

Das Produkt besitzt eine Viskosität von 125 mPas und besitzt einen temporären Gelwert (1 h) von 2 mL. Das Produkt ist nach 16 h vollständig löslich.

Der E_{b}C₅₀-Wert dieses Produktes liegt bei 19 mg/L.

## Patentansprüche

1. Wasserlösliche Homo- oder Copolymerpartikel auf Basis von Monomeren ausgewählt aus der Gruppe bestehend aus Acrylsäure, Methacrylsäure, Acrylsäurederivaten, wie den Salzen der Acrylsäure und Methacrylsäure, Acrylamid, Methacrylamid, Acrylnitril, Methacrylnitril, N,N-Dimethylacrylamid, Vinylpyridin, Vinylacetat, wasserlöslichen, ethylenisch ungesättigten organischen Säuren, wie Maleinsäure, Fumarsäure, Itaconsäure, Vinylsulfonsäure, Acrytamidomethylpropansulfonsäure, und deren Salzen, hydroxygruppenhaltigen Estern polymerisationsfähiger Säuren, wie Hydroxyethyl- und propylester der Acrylsäure und Methacrylsäure, aminogruppenhaltigen Estern polymerisationsfähiger Säuren, wie Dimethyl- und Diethylaminoalkylester und -amide der Acrylsäure und Methacrylsäure,
**dadurch gekennzeichnet, dass** sie einen E_{b}C₅₀-Wert gemäß dem Algentoxizüätstest an *Scenedesmus subspicatus* von mehr als 10 mg/ml aufweisen.

2. Wasserlösliche Polymerpartikel nach Anspruch 1, **dadurch gekennzeichnet, dass** sie
a) wenigstens ein polymerisiertes (Meth)acrylsäurederivat oder polymerisierte (Meth)acrylsäure enthalten,
b) die Polymerpartikel wärmebehandelt sind und
c) der Monomerenlösung vor der Polymerisation und/oder den Polymerpartikeln vor der Wärmebehandlung wenigstens ein Ammoniumsalz und ein wasserlösliches Amin zugesetzt werden.

3. Wasserlösliche Polymerpartikel nach Anspruch 1 oder 2, **dadurch gekennzeichnet, dass** das Ammoniumsalz wenigstens ein wasserlösliches anorganisches oder ein organisches Ammoniumsalz ist.

4. Wasserlösliche Polymerpartikel nach einem der Ansprüche 1 bis 3, **dadurch gekennzeichnet, dass** die Konzentration des Ammoniumsalzes im Produkt 0,05 bis 10 Gew.% und bevorzugt 0,2 bis 3 Gew.% ist.

5. Wasserlösliche Polymerpartikel nach einem der Ansprüche 1 bis 4, **dadurch gekennzeichnet, dass** das Amin ein Alkanolamin, bevorzugt Isopropanolamin, ist.

6. Wasserlösliche Polymerpartikel nach einem der Ansprüche 1 bis 5, **dadurch gekennzeichnet, dass** die Konzentration des Amins im Produkt 0,1 bis 12 Gew.%, bevorzugt 0,5 bis 5 Gew.%, ist.

7. Wasserlösliche Polymerpartikel nach einem der Ansprüche 1 bis 6, **dadurch gekennzeichnet, dass** sie als weiteres polymerisiertes Monomer
a) wenigstens eine monoethylenisch, ungesättigte C₃-₁₀-Monocarbonsäure und/oder deren Alkali- und/oder Ammonium- und/oder Aminsalze und/oder
b) wenigstens ein weiteres, radikalisch, copolymerisierbares Monomer
enthalten.

8. Wasserlösliche Polymerpartikel nach einem der Ansprüche 1 bis 6, **dadurch gekennzeichnet, dass** sie im wesentlichen aus 1 bis 99 Gew.% polymerisiertem Acrylamid und 99 bis 1 Gew.% polymerisierter Acrylsäure bestehen.

9. Wasserlösliche Polymerpartikel nach Anspruch 8, **dadurch gekennzeichnet, dass** die Acrylsäure zu 1 bis 100 Mol% neutralisiert ist.

10. Verfahren zur Herstellung von wasserlöslichen Polymerpartikeln mit einem E_{b}C₅₀-Wert gemäß dem Algentoxizitätstest an *Scenedesmus subspicatus* von mehr als 10 mg/l, **dadurch gekennzeichnet, dass**
a) eine Monomerenlösung umfassend ein Monomer ausgewählt aus der Gruppe bestehend aus
Acrylsäure, Methacrylsäure, Acrylsäurederivate, wie den Salzen der Acrylsäure und Methacrylsäure, Acrylamid, Methacrylamid, Acrylnitril, Methacrylnitril, N,N-Dimethylacrylamid, Vinylpyridin, Vinylacetat, wasserlöslichen, ethylenisch ungesättigten organischen Säuren, wie Maleinsäure, Fumarsäure, Itaconsäure, Vinylsulfonsäure. Acrylamidomethylpropansulfonsäure, und deren Salzen, hydroxygruppenhaltigen Estern polymerisationsfähiger Säuren, wie Hydroxyethyl- und propylester der Acrylsäure und Methacrylsäure, aminogruppenhaltigen Estern polymerisationsfähiger Säuren, wie Dimethyl- und Diethylaminoalkylester und -amide der Acrylsäure und Methacrylsäure,
polymerisiert wird;
b) die resultierenden Polymerpartikel wärmebehandelt werden und
c) der Monomerenlösung vor der Polymerisation und/oder den Polymerpartikeln vor einer Wärmebehandlung wenigstens ein Ammoniumsalz und ein wasserlösliches Amin zugesetzt werden.

11. Verfahren nach Anspruch 10, **dadurch gekennzeichnet, dass** die Polymerpartikel bei einer Temperatur von 80 bis 120°C, besonders bevorzugt von 90 bis 110°C, wärmebehandelt werden.

12. Verfahren nach Anspruch 10 oder 11, **dadurch gekennzeichnet, dass** als Ammoniumsalz wenigstens ein wasserlösliches anorganisches und/oder wenigstens ein organisches Ammoniumsalz zugesetzt wird.

13. Verfahren nach einem der Ansprüche 10 bis 12, **dadurch gekennzeichnet, dass** das Ammoniumsalz in einer Konzentration von 0,05 bis 10 Gew.% und besonders bevorzugt von 0,2 bis 3 Gew.%, bezogen auf das Produkt, zugesetzt wird.

14. Verfahren nach einem der Ansprüche 10 bis 13, **dadurch gekennzeichnet, dass** als Amin ein Alkanolamin, besonders bevorzugt Isopropanolamin, zugesetzt wird.

15. Verfahren nach einem der Ansprüche 10 bis 14, **dadurch gekennzeichnet, dass** das wasserlösliche Amin in einer Konzentration von 0,1 bis 12 Gew.%, besonders bevorzugt von 0,5 bis 5 Gew.%, bezogen auf das Produkt, zugesetzt wird.

16. Verfahren nach einem der Ansprüche 10 bis 15, **dadurch gekennzeichnet, dass** das Amin und das Ammoniumsalz jeweils der Monomerenlösung vor der Polymerisation und/oder den Polymerpartikeln vor einer Wärmebehandlung zugesetzt werden.

17. Verfahren nach einem der Ansprüche 10 bis 15, **dadurch gekennzeichnet, dass** das der Aminzusatz zur Monomerenlösung erfolgt und das Ammoniumsalz den Polymerpartikeln vor einer Wärmebehandlung zugesetzt wird.

18. Verfahren nach einem der Ansprüche 10 bis 15, **dadurch gekennzeichnet, dass** das Ammoniumsalz der Monomerenlösung vor der Polymerisation und das Amin den Polymerpartikeln vor einer Wärmebehandlung zugesetzt wird.

19. Verwendung der wasserlöslichen Polymerpartikel nach einem der Ansprüche 1 bis 9 als Flockungshilfsmittel
a) bei der Wasseraufbereitung und Reinigung von Abwässern, vorzugsweise in Kombination mit kationischen Flockungshilfsmitteln
b) in der Zuckerindustrie und/oder
c) im Bergbau (Erz/Kohle),
d) bei der Eisenabtrennung im Bayer-Prozeß,

20. Verwendung der wasserlöslichen Polymerpartikel nach einem der Ansprüche 1 bis 9 als Verdickungsmittel.

21. Verwendung der wasserlöslichen Polymerpartikel nach einem der Ansprüche 1 bis 9 als Bestandteil eines Pflanzenschutzmittels.

22. Verwendung der wasserlösliche Polymerpartikel nach einem der Ansprüche 1 bis 9 als Bestandteil eines Erosionsschutzmittels.

23. Verwendung der wasserlöslichen Polymerpartikel nach einem der Ansprüche 1 bis 9 als Bestandteil von wasserbasierenden Bohrspülungen.

24. Verwendung nach einem der Ansprüche 19 bis 23, **dadurch gekennzeichnet, dass** der E_{b}C₅₀-Wert des verwendeten Mittels mehr als 10 mg/l beträgt.

## Claims

1. Water-soluble homopolymer or copolymer particles based on monomers selected from the group consisting of acrylic acid, methacrylic acid, acrylic acid derivatives such as salts of acrylic acid and methacrylic acid, acrylamide, methacrylamide, acrylonitrile, methacrylonitrile, N,N-dimethylacrylamide, vinylpyridine, vinyl acetate, water-soluble, ethylenically unsaturated organic acids such as maleic acid, fumaric acid, itaconic acid, vinylsulfonic acid, acrylamidomethylpropanesulfonic acid and the salts thereof, hydroxyl group-containing esters of polymerisable acids, such as hydroxyethyl and hydroxypropyl esters of acrylic acid and methacrylic acid, and amino group-containing esters of polymerisable acids, such as dimethylaminoalkyl and diethylaminoalkyl esters and amides of acrylic acid and methacrylic acid **characterised in that** they have an E_{b}C₅₀ value of more than 10 mg/l in an algal toxicity test on *Scenedesmus subspicatus.*

2. Water-soluble polymer particles according to claim 1, **characterised in that**
a) they contain at least one polymerised (meth)acrylic acid derivative or polymerised (meth)acrylic acid,
b) the polymer particles are heat-treated and
c) at least one ammonium salt and one water-soluble amine are added to the monomer solution before polymerisation and/or to the polymer particles before the heat treatment.

3. Water-soluble polymer particles according to claim 1 or claim 2, **characterised in that** the ammonium salt is at least one water-soluble inorganic ammonium salt or one organic ammonium salt.

4. Water-soluble polymer particles according to one of claims 1 to 3, **characterised in that** the concentration of ammonium salt in the product is 0.05 to 10% by weight and preferably 0.2 to 3% by weight.

5. Water-soluble polymer particles according to one of claims 1 to 4, **characterised in that** the amine is an alkanolamine, preferably isopropanolamine.

6. Water-soluble polymer particles according to one of claims 1 to 5, **characterised in that** the concentration of amine in the product is 0.1 to 12% by weight, preferably 0.5 to 5% by weight.

7. Water-soluble polymer particles according to one of claims 1 to 6, **characterised in that** they contain, as an additional polymerised monomer,
a) at least one monoethylenically unsaturated C₃₋₁₀ monocarboxylic acid and/or the alkali metal and/or ammonium and/or amine salts thereof, and/or
b) at least one further monomer copolymerisable by free radical polymerisation.

8. Water-soluble polymer particles according to one of claims 1 to 6, **characterised in that** they essentially consist of 1 to 99% by weight of polymerised acrylamide and 99 to 1 % by weight of polymerised acrylic acid.

9. Water-soluble polymer particles according to claim 8, **characterised in that** the acrylic acid is neutralised to an extent of 1 to 100 mol%.

10. Process for the preparation of water-soluble polymer particles with an E_{b}C₅₀ value of more than 10 mg/l in an algal toxicity test on *Scenedesmus subspicatus,* **characterised in that**
a) a monomer solution comprising a monomer selected from the group consisting of acrylic acid, methacrylic acid, acrylic acid derivatives such as salts of acrylic acid and methacrylic acid, acrylamide, methacrylamide, acrylonitrile, methacrylonitrile, N,N-dimethylacrylamide, vinylpyridine, vinyl acetate, water-soluble, ethylenically unsaturated organic acids such as maleic acid, fumaric acid, itaconic acid, vinylsulfonic acid, acrylamidomethylpropanesulfonic acid and the salts thereof, hydroxyl group-containing esters of polymerisable acids, such as hydroxyethyl and hydroxypropyl esters of acrylic acid and methacrylic acid, and amino group-containing esters of polymerisable acids, such as dimethylaminoalkyl and diethylaminoalkyl esters and amides of acrylic acid and methacrylic acid is polymerised,
b) the resulting polymer particles are heat-treated and
c) at least one ammonium salt and one water-soluble amine are added to the monomer solution before polymerisation and/or to the polymer particles before a heat treatment.

11. Process according to claim 10, **characterised in that** the polymer particles are heat-treated at a temperature of 80 to 120°C and particularly preferably of 90 to 110°C.

12. Process according to claim 10 or claim 11, **characterised in that** the ammonium salt added is at least one water-soluble inorganic ammonium salt and/or at least one organic ammonium salt.

13. Process according to one of claims 10 to 12, **characterised in that** the ammonium salt is added in a concentration of 0.05 to 10% by weight and particularly preferably of 0.2 to 3% by weight, relative to the product.

14. Process according to one of claims 10 to 13, **characterised in that** the amine added is an alkanolamine, particularly preferably isopropanolamine.

15. Process according to one of claims 10 to 14, **characterised in that** the water-soluble amine is added in a concentration of 0.1 to 12% by weight, particularly preferably of 0.5 to 5% by weight, relative to the product.

16. Process according to one of claims 10 to 15, **characterised in that** the amine and the ammonium salt are each added to the monomer solution before polymerisation and/or to the polymer particles before a heat treatment.

17. Process according to one of claims 10 to 15, **characterised in that** the amine is added to the monomer solution and the ammonium salt is added to the polymer particles before a heat treatment.

18. Process according to one of claims 10 to 15, **characterised in that** the ammonium salt is added to the monomer solution before polymerisation and the amine is added to the polymer particles before a heat treatment.

19. Use of the water-soluble polymer particles according to one of claims 1 to 9 as a flocculation aid
a) in water processing and waste water treatment, preferably in combination with cationic flocculation aids,
b) in the sugar industry and/or,
c) in mining (ore/coal),
d) in the separation of iron in the Bayer process.

20. Use of the water-soluble polymer particles according to one of claims 1 to 9 as a thickener.

21. Use of the water-soluble polymer particles according to one of claims 1 to 9 as a constituent of a plant protection agent.

22. Use of the water-soluble polymer particles according to one of claims 1 to 9 as a constituent of an antierosion agent.

23. Use of the water-soluble polymer particles according to one of claims 1 to 9 as a constituent of water-based drilling fluids.

24. Use according to one of claims 19 to 23, **characterised in that** the E_{b}C₅₀ value of the agent used is more than 10 mg/l.

## Revendications

1. Particules d'homopolymère ou de copolymère hydrosolubles à base de monomères choisis parmi le groupe constitué de l'acide acrylique, de l'acide méthacrylique, des dérivés de l'acide acrylique, tels que les sels de l'acide acrylique et de l'acide méthacrylique, de l'acrylamide, du méthacrylamide, de l'acrylonitrile, du méthacrylonitrile, du N,N-diméthylacrylamide, de la vinylpyridine, de l'acétate de vinyle, des acides organiques hydrosolubles, éthyléniquement insaturés, tels que l'acide maléique, l'acide fumarique, l'acide itaconique, l'acide vinylsulfonique, l'acide acrylamidométhylpropanesulfonique, et de leurs sels, des esters renfermant des groupes hydroxy d'acides polymérisables, tels que l'ester hydroxyéthylique et l'ester hydroxypropylique de l'acide acrylique et de l'acide méthacrylique, des esters renfermant des groupes amino d'acides polymérisables, tels que des diméthyl- et diéthylaminoalkylesters et -amides de l'acide acrylique et de l'acide méthacrylique,
**caractérisées en ce qu'**elles présentent une valeur de E_{b}C₅₀, conformément à l'essai de toxicité d'algues sur *Scenedesmus subspicatus* de plus de 10 mg/ml.

2. Particules de polymère hydrosolubles selon la revendication 1, **caractérisées en ce que** :
a) elles comprennent au moins un dérivé d'acide (méth)acrylique polymérisé ou un acide (méth)-acrylique polymérisé,
b) les particules de polymère sont traitées à chaud, et
c) au moins un sel d'ammonium et une amine hydrosoluble sont ajoutés à la solution de monomères avant la polymérisation et/ou aux particules de polymère avant le traitement à chaud.

3. Particules de polymère hydrosolubles selon la revendication 1 ou 2, **caractérisées en ce que** le sel d'ammonium est au moins un sel d'ammonium inorganique ou organique hydrosoluble.

4. Particules de polymère hydrosolubles selon l'une quelconque des revendications 1 à 3, **caractérisées en ce que** la concentration du sel d'ammonium dans le produit est de 0,05 à 10 % en poids et, de préférence, de 0,2 à 3 % en poids.

5. Particules de polymère hydrosolubles selon l'une quelconque des revendications 1 à 4, **caractérisées en ce que** l'amine est une alcanolamine, de préférence l'isopropanolamine.

6. Particules de polymère hydrosolubles selon l'une quelconque des revendications 1 à 5, **caractérisées en ce que** la concentration de l'amine dans le produit est de 0,1 à 12 % en poids, de préférence de 0,5 à 5 % en poids.

7. Particules de polymère hydrosolubles selon l'une quelconque des revendications 1 à 6, **caractérisées en ce qu'**elles comprennent, en tant que monomère polymérisé supplémentaire :
a) au moins un acide monocarboxylique en C₃₋₁₀ mono-éthyléniquement insaturé et/ou des sels de métaux alcalins et/ou d'ammonium et/ou d'amine de celui-ci, et/ou
b) au moins un monomère supplémentaire copolymérisable par voie radicalaire.

8. Particules de polymère hydrosolubles selon l'une quelconque des revendications 1 à 6, **caractérisées en ce qu'**elles sont constituées essentiellement de 1 à 99 % en poids d'acrylamide polymérisé et de 99 à 1 % en poids d'acide acrylique polymérisé.

9. Particules de polymère hydrosolubles selon la revendication 8, **caractérisées en ce que** l'acide acrylique est neutralisé à 1 à 100 % en moles.

10. Procédé de préparation de particules de polymère hydrosolubles présentant une valeur de E_{b}C₅₀, conformément à l'essai de toxicité d'algues sur *Scenedesmus subspicatus* de plus de 10 mg/l, **caractérisé en ce que** :
a) une solution de monomères comprenant un monomère choisi parmi le groupe constitué :
de l'acide acrylique, de l'acide méthacrylique, des dérivés de l'acide acrylique, tels que les sels de l'acide acrylique et de l'acide méthacrylique, de l'acrylamide, du méthacrylamide, de l'acrylonitrile, du méthacrylonitrile, du N,N-diméthylacrylamide, de la vinylpyridine, de l'acétate de vinyle, des acides organiques hydrosolubles, éthyléniquement insaturés, tels que l'acide maléique, l'acide fumarique, l'acide itaconique, l'acide vinylsulfonique, l'acide acrylamidométhylpropanesulfonique, et de leurs sels, des esters renfermant des groupes hydroxy d'acides polymérisables, tels que l'ester hydroxyéthylique et l'ester hydroxypropylique de l'acide acrylique et de l'acide méthacrylique, des esters renfermant des groupes amino d'acides polymérisables, tels que des diméthyl- et diéthylaminoalkylesters et -amides de l'acide acrylique et de l'acide méthacrylique,
est polymérisée ;
b) les particules de polymère résultantes sont traitées à chaud, et
c) au moins un sel d'ammonium et une amine hydrosoluble sont ajoutés à la solution de monomères avant la polymérisation et/ou aux particules de polymère avant un traitement à chaud.

11. Procédé selon la revendication 10, **caractérisé en ce que** les particules de polymère sont traitées à chaud à une température de 80 à 120 °C, particulièrement préférablement de 90 à 110 °C.

12. Procédé selon la revendication 10 ou 11, **caractérisé en ce qu'**au moins un sel d'ammonium inorganique hydrosoluble et/ou au moins un sel d'ammonium organique sont ajoutés en tant que sel d'ammonium.

13. Procédé selon l'une quelconque des revendications 10 à 12, **caractérisé en ce que** le sel d'ammonium est ajouté en une concentration de 0,05 à 10 % en poids et, particulièrement préférablement de 0,2 à 3 % en poids, par rapport au produit.

14. Procédé selon l'une quelconque des revendications 10 à 13, **caractérisé en ce qu'**une alcanolamine, particulièrement préférablement l'isopropanolamine, est ajoutée en tant qu'amine.

15. Procédé selon l'une quelconque des revendications 10 à 14, **caractérisé en ce que** l'amine hydrosoluble est ajoutée en une concentration de 0,1 à 12 % en poids, particulièrement préférablement de 0,5 à 5 % en poids, par rapport au produit.

16. Procédé selon l'une quelconque des revendications 10 à 15, **caractérisé en ce que** l'amine et le sel d'ammonium sont ajoutés, dans chaque cas, à la solution de monomères avant la polymérisation et/ou aux particules de polymère avant un traitement à chaud.

17. Procédé selon l'une quelconque des revendications 10 à 15, **caractérisé en ce que** l'addition d'amine à la solution de monomères est réalisée et le sel d'ammonium est ajouté aux particules de polymère avant un traitement à chaud.

18. Procédé selon l'une quelconque des revendications 10 à 15, **caractérisé en ce que** le sel d'ammonium est ajouté à la solution de monomères avant la polymérisation et l'amine est ajoutée aux particules de polymère avant un traitement à chaud.

19. Utilisation des particules de polymère hydrosolubles selon l'une quelconque des revendications 1 à 9 en tant qu'auxiliaire de floculation :
a) lors du traitement des eaux et lors de la purification des eaux usées, de préférence, en combinaison avec des auxiliaires de floculation cationiques,
b) dans l'industrie du sucre, et/ou
c) dans l'exploitation des mines (minerai/ charbon),
d) lors de la séparation du fer dans le procédé Bayer.

20. Utilisation des particules de polymère hydrosolubles selon l'une quelconque des revendications 1 à 9 en tant qu'agent épaississant.

21. Utilisation des particules de polymère hydrosolubles selon l'une quelconque des revendications 1 à 9 en tant que constituant d'un agent phytoprotecteur.

22. Utilisation des particules de polymère hydrosolubles selon l'une quelconque des revendications 1 à 9 en tant que constituant d'un agent de protection contre l'érosion.

23. Utilisation des particules de polymère hydrosolubles selon l'une quelconque des revendications 1 à 9 en tant que constituant de boues de forage à base d'eau.

24. Utilisation selon l'une quelconque des revendications 19 à 23, **caractérisée en ce que** la valeur de E_{b}C₅₀ de la composition utilisée est de plus de 10 mg/l.
